# EUROPEAN PATENT SPECIFICATION

(11) **EP 1 976 706 B1**
(45) Date of publication and mention of the grant of the patent: **13.06.2012**
(21) Application number: 07704793.4
(22) Date of filing: 19.01.2007
(51) Int. Cl.: B42D 3/00, B42C 7/00, B42C 11/04

(54) **METHOD AND DEVICE FOR FINISHING A BOOK COVER**
VERFAHREN UND VORRICHTUNG ZUR FERTIGSTELLUNG EINES BUCHEINBANDS
PROCEDE ET DISPOSITIF DE FINISSURE DE COUVERTURE DE LIVRE

(30) Priority: 25.01.2006 FI 20060074
(43) Date of publication of application: 08.10.2008
(73) Proprietor: Maping Kommandiittiyhtiö L. Huotari, 02710 Espoo (FI)
(72) Inventor: HUOTARI, Henri, FI-02760 Espoo (FI); HUOTARI, Lisakki, FI-00370 Helsinki (FI); SIIKAMÄKI, Markku, FI-02230 Espoo (FI)
(74) Representative: Väisänen, Olli Jaakko
(86) International application number: PCT/FI2007/000019
(87) International publication number: WO 2007/085684

(56) References cited:
- EP-A1- 0 461 083
- WO-A1-01/87638
- WO-A2-94/29206
- DE-A1- 10 355 252
- US-A- 1 898 123
- US-A- 2 970 634
- US-A- 3 448 684
- US-A- 4 289 493
- US-A1- 2004 065 132

## Description

The present invention relates to a method and device for finishing a cover of a book or similar It relates particularly to a so-called hard cover.

Nowadays, book cover are usually made in such a way that the front cover and the back cover, as well as a piece of cover material or slightly thinner sturdy material acting as a support for the spine, are positioned as accurately as possible on a surface film with an adhesive surface.

Once the aforementioned pieces have been positioned in place and are secured preliminarily to the adhesive-surfaced film, the corners of the parts protruding beyond the cover pieces are cut away and the free part is folded onto the inside of the cover, to which it adheres. In the stage in which the interior of the book is attached in place, a further liner page of paper is glued to the inner surfaces of the covers.

In the case of the parts that protrude outside the covers after the first stage, the folding and attachment of the surface film can be performed entirely manually, or at that stage auxiliary devices can be used. In one of the applicant's previous inventions, after the first stage of gluing the cover pieces, the cover is pushed between and through two rollers.

The passage through the aforementioned rollers takes place as a movement in a straight line directly between the rollers, by pushing at their centre point. The drawback is that the surface film must be already folded to some extent in its final folding direction, so that the film will not crumple in the wrong way. All in all, there is a relatively large possibility for the loose film to become wrapped around the edge of the cover.

Another purpose of the rollers is that they press the surface film very tightly onto the cover material as it travels between the rollers. However, if the rollers are tightened with the aid of, for example, springs, a specific pressure that is sufficient for carrying out the work, against each other, it will be extremely difficult to make the cover go between the rollers by only pushing it. If, on the other hand, the tightening is left so loose that the cover goes easily between the rollers, the pressure may be insufficient.
US patent 2 97 0 634 (the '634 patent) discloses an apparatus for applying cover material to book cores and cases. Three sections of core material are glued to the cover material and then the marginal edges are folded over the edges of the core to form a completed structure ready to receive the book to be bound therein.
In the apparatus shown in the '634 patent, continued forward motion of the cover assembly folds the edge backwardly whereupon it is picked up by the pressure rollers. These rollers move the cover assembly forwardly and into the notch in cushioning bar. This bar is slidably mounted on a tradck and is moved backwardly against suitable compression springs so that the trailing edge of the cover assembly can be moved downwardly over the surface of shield which overlies a portion of the periphery of roller.
By using the apparatus of the '634 patent, the cover is forcibly moved down under the action of a rotary depressor, which action rolls the edge tighly over the edge of the cores whereupon the spring loaded bar moves the cover into engagement with rollers to complete the last marginal fold and discharge the finished cover from the apparatus.

The present invention is intended to create a solution to the problems described above and for thus create a device, which is easy to use and with the aid of which an equally good result will always be achieved.

The aforementioned and other advantages and benefits of the present invention are achieved by means of a method and device, the characteristic features of which are stated in the accompanying Claims.

In the following, the invention is examined in greater detail with reference to the accompanying drawings, which show one well-regarded embodiment of the invention.

Thus:
Figure 1 shows an axonometric view of one embodiment of the invention;
Figure 2 shows a top view of the same device;
Figure 3 shows the initial position of the book cover, in the stage when the surface film is begun to be folded onto the inner sides of the cover; and
Figure 4 shows the final stage of the folding.

The method according to the invention will be depicted in connection with the description of the device.

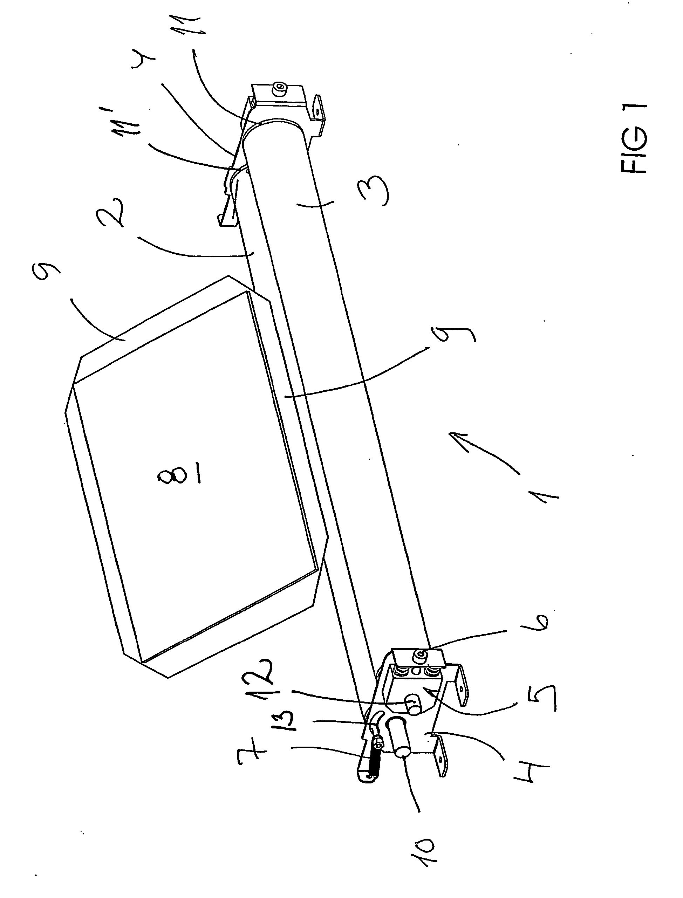

The features of the device shown in Figure 1 are the following. The device 1 is formed of two rollers 2 and 3 attached to a frame 4, 4. In a conventional manner, the rollers have shafts 10 and 12, on which they are attached to the frame. The shaft 12 of the roller 3 is to some extent movable against the spring force caused by a spring device 5.

Although it may appear in the figures that the rollers lie tightly against each other, this is not the case, but instead there is a small gap between the rollers, which is defined by disc-like protrusions 11, 11' located at the ends of the rollers, which when they come into contact with each other define the minimum distance between the rollers. Naturally, there are protrusions of this kind at both ends of the rollers.

As stated, the device includes a spring device at both ends of the roller 3, by adjusting the adjustment screws of which the roller 3 can be pressed to its extreme position with a specific force. In the device according to the invention, the force can be sufficiently great, because bringing the cover 8 between the rollers 2 and 3 is not a measure requiring excessive exertion, on account of the small gap between the rollers. In order to ensure and facilitate this, it is possible to add a lever (not shown) to the end of the shaft 10, by means of which the shaft 10, and at the same time of course the roller 2, can be rotated. The rotation helps the cover to be placed easily between the rollers at the start.

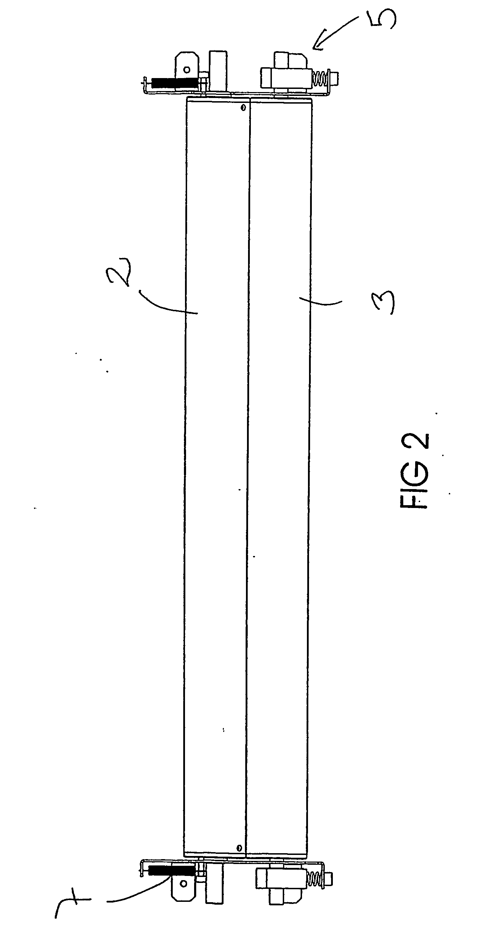

Figure 2 shows a top view of the device of the invention, and as such does not require additional explanation.

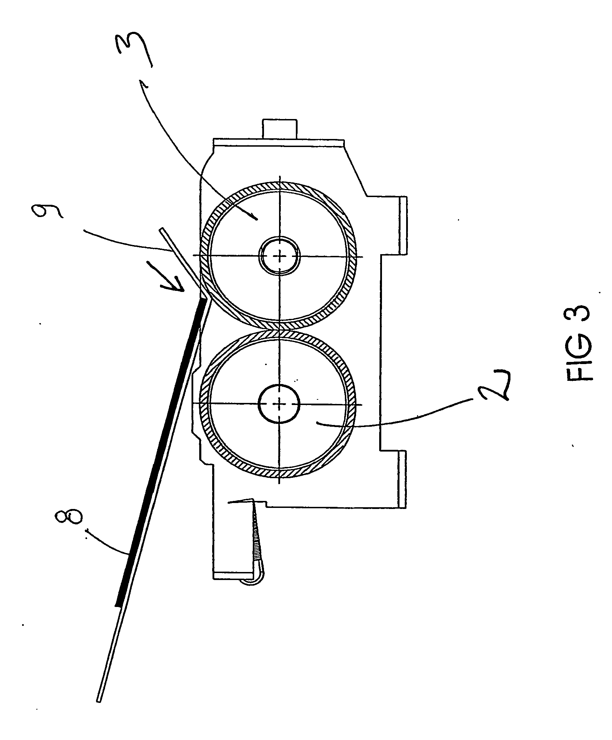

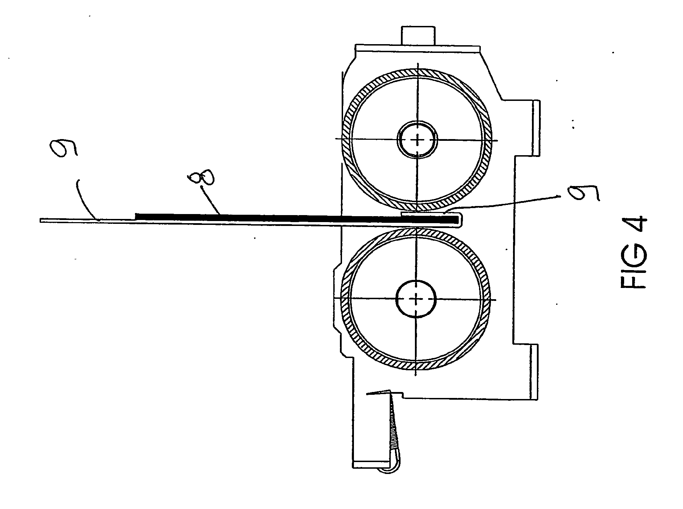

The operation of the device according to the invention is as follows. It is shown in Figures 3 and 4, in which the structure of Figure 1 is shown in cross-section more or less in the centre, and in any event at the cover 8 shown in Figure 1.

Thus, referring to Figures 1 and 3, the process starts after the stage, in which the cover piece 8 is glued to the surface film 9, which protrudes over the edges of the cover 8 and from which the corners have already been cut off. The parts protruding from the cover have adhesive surfaces, so that the protruding part can be glued onto the inner side of the cover.

Unlike known methods, which were the manual folding of the film, or running the cover between two rollers in a straight direction, the method now comprises the work being commenced by bring the cover 8 with the surface film to the roller 3, more or less in the position shown in Figure 3. The entire structure can be encased in such a way that the cover 8 can come within a small distance of a stop on the surface of the rollers at the same time as it is brought against the roller 3, particularly being pressed in a slanting position against the roller and being guided towards the gap between the rollers. Thus, the movement can be sliding along the surface of the roller 3, or the rollers can also be rotated by the movement, in which case the edge of the cover 8 will remain more or less in place on the surface of the roller 3.

At this stage, just enough force is used to ensure that the surface film 9 folded over the edge of the cover settles firmly against the edge of the cover. Additional folding of the film 9 is ensured by holding the edge of the cover the whole time tightly against the surface of the roller 3 when the cover is turned to the position shown in Figure 4, in which the cover goes at least between the rollers to the extent of the folding edge part of the film, so that the pressure of the rollers will create firm adhesion.

After this, the cover is pulled away from between the rollers and is turned for the preparation of the next edge. The same series of operations is performed for each edge to be folded and thus the cover is finished.

Figure 1 shows a further variation of the basic model. In this case, a spring 7, one end of which is attached to the frame structures and the opposite end to a pin, which is attached to the roller 2, and which is intended to move in a slot 13. Thus the extent of the rotation of the roller 2 is only the length of the slot 13, which is calculated to be sufficient to bring the edge to a folded/glued state. Particularly if the lever at the end of the shaft 10 is used to assist the entry of the cover between the rollers, the spring 7 will assist the roller to rotate back to its starting position without the lever needing to be turned backwards

It is obvious that the invention can be varied in many ways, without nevertheless deviating from the inventive idea and the scope of protection of the accompanying Claims. The shapes and dimensions can vary even greatly from those shown, which depict only the most essentially necessary part of the total apparatus, in terms of the operation of the invention.

## Claims

1. Method for folding the parts of the surface film (9) of a book cover (8), which protrude from the cover, onto the cover and attaching them to the inner surface of the cover, by using for this purpose a device formed of two rollers (2, 3), **characterized in that**:
- a gap is formed between the rollers, which is smaller than the thickness of the cover (8) being dealt with,
- at least one roller (3) is spring-loaded towards the other roller (2),
- the cover (8) being dealt with, to which the surface film (9) is glued in such a way that its edges protrude outside the edges of the cover, is brought against the surface of one roller at an essentially slanting position relative to it, at the same time pressing it against the roller, and
- the edge of the cover is turned, while still pressing it against the roller, between the rollers to at least the extent of the film being folded onto the inner surface of the cover, taking it into the pressure of the rollers.

2. Method according to claim 1, wherein the transfer of the cover (8) to between the rollers (2, 3) is assisted by rotating a lever located on the shaft of a roller.

3. Method according to claim 1 or 2, wherein each side of the cover is dealt with consecutively, in essentially the same way.

4. Device for folding the parts of the surface film (9) of a book cover (8), which protrude from the cover, onto the cover and attaching them to the inner surface of the cover, in which device there are two rollers (3, 4), **characterized in that**, in order to keep the rollers at a predefined distance to each other, there are in the device disc-like components (11) defining the gap, and that at least one roller (3) is equipped at both of its ends with a spring device (5), for pressing the roller towards the adjacent roller (2) with the aid of springs.

5. Device according to claim 4, wherein the gap between the rollers is smaller than the thickness of the cover (8) being dealt with.

6. Device according to claim 4 or 5, wherein the other roller (2) is equipped with a hand-operated handle, to assist rotation while the cover is being put between the rollers.

7. Device according to any one of claims 4 to 6, wherein the extent of the rotation of the roller (2) is limited.

## Patentansprüche

1. Verfahren zum Umlegen der Teile der Oberflächenfolie (9) einer Buchdecke (8), die über die Decke hinausragen, auf die Decke und Befestigen derselben an der inneren Oberfläche der Decke mittels Verwendung einer Vorrichtung bestehend aus zwei Walzen (2, 3) zu diesem Zweck,
**dadurch gekennzeichnet, dass**
• ein Spalt zwischen den Walzen geformt wird, der geringer ist als die Dicke der in Bearbeitung befindlichen Decke (8),
• mindestens eine Walze (3) zur anderen Walze (2) hin federbelastet ist,
• die in Bearbeitung befindliche Decke (8), mit der die Oberflächenfolie (9) so verleimt ist, dass ihre Kanten über die Kanten der Decke hinausragen, in einer im Wesentlichen geneigten Position relativ zur Walze gegen die Oberfläche einer Walze gebracht wird, sie gleichzeitig gegen die Walze gedrückt wird und
• während sie weiter gegen die Walze gedrückt wird, die Kante der Decke zwischen den Walzen mindestens soweit umgedreht wird, dass die Folie auf die innere Oberfläche der Decke umgelegt wird, wobei sie zwischen die Walzen gedrückt wird.

2. Verfahren nach Anspruch 1, wobei der Transfer der Decke (8) zwischen die Walzen (2, 3) unterstützt wird durch Drehen eines an der Welle einer Walze befindlichen Hebels.

3. Verfahren nach Anspruch 1 oder 2, wobei alle Seiten der Decke nacheinander auf eine im Wesentlichen gleiche Weise bearbeitet werden.

4. Vorrichtung zum Umlegen der Teile des Oberflächenfilms (9) einer Buchdecke (8), die über die Decke hinausragen, auf die Decke und Befestigen derselben an der inneren Oberfläche der Decke, wobei sich in der Vorrichtung zwei Walzen (3, 4) befinden, **dadurch gekennzeichnet, dass** sich zur Wahrung eines vorbestimmten Abstandes der Walzen zueinander in der Vorrichtung scheibenartige Bauteile (11) befinden, die den Spalt definieren und dass mindestens eine Walze (3) an ihren beiden Enden mit einer Federvorrichtung (5) ausgestattet ist, mit der die Walze mit Hilfe von Federn zur benachbarten Walze (2) hingedrückt wird.

5. Vorrichtung nach Anspruch 4, wobei der Spalt zwischen den Walzen geringer ist als die Dicke der in Bearbeitung befindlichen Decke (8).

6. Vorrichtung nach Anspruch 4 oder 5, wobei die andere Walze (2) mit einem manuell betätigbaren Hebel ausgestattet ist, um die Drehung zu unterstützen, während die Decke zwischen die Walzen gesteckt wird.

7. Vorrichtung nach einem der vorhergehenden Ansprüche 4 bis 6, wobei das Ausmaß der Drehung der Walze (2) eingeschränkt ist.

## Revendications

1. Procédé pour plier les parties d'un film (9) de surface de couverture de livre (8) dépassant de la couverture sur la couverture, et fixer lesdites parties sur la face interne de la couverture en utilisant à cet effet un dispositif composé de deux rouleaux (2, 3) **caractérisé en ce que** :
- un espace plus petit que l'épaisseur de la couverture (8) traitée est formé entre les rouleaux,
- au moins un rouleau (3) est sollicité par ressort vers l'autre rouleau (2),
- la couverture traitée (8), sur laquelle le film (9) de surface est collé de telle sorte que les bords dudit film dépassent des bords de la couverture, est placée contre la surface de l'un des rouleaux dans une position fondamentalement oblique par rapport au dit rouleau et pressée dans le même temps contre le rouleau, et
- le bord de la couverture est pivoté entre les deux rouleaux, tout en maintenant la pression contre le rouleau, au moins jusqu'à ce que le film soit plié sur la face interne de la couverture en utilisant la pression des rouleaux.

2. Procédé selon la revendication 1, dans le lequel la couverture (8) est placée entre les rouleaux (2, 3) à l'aide d'un levier situé sur l'axe d'un rouleau.

3. Procédé selon la revendication 1 ou la revendication 2, dans lequel les côtés de la couverture sont traités l'un après l'autre d'une manière fondamentalement identique.

4. Procédé pour plier les parties d'un film (9) de surface de couverture de livre (8) dépassant de la couverture sur la couverture, et fixer lesdites parties sur la face interne de la couverture en utilisant un dispositif composé de deux rouleaux (3, 4) **caractérisé en ce que** le dispositif contient des composants semblables à des disques (11) définissant l'espace entre les rouleaux afin de maintenir les rouleaux à une distance prédéfinie l'un de l'autre, et **en ce que** au moins un rouleau (3) est équipé à chaque extrémité d'un ressort (5) destiné à presser ledit rouleau (3) contre le rouleau adjacent (2) à l'aide de ces ressorts.

5. Dispositif selon la revendication 4, dans lequel l'espace entre les rouleaux est plus petit que l'épaisseur de la couverture (8) traitée.

6. Dispositif selon la revendication 4 ou la revendication 5, dans lequel l'autre rouleau (2) est équipé d'une manette actionnée à la main afin de faciliter la rotation au moment où la couverture est placée entre les rouleaux.

7. Dispositif selon l'une quelconque des revendications 4 à 6, dans lequel l'ampleur de la rotation du rouleau (2) est limitée.
